(19) Europäisches Patentamt
European Patent Office
Office européen des brevets

(11) **EP 3 373 583 A1**

(12) **EUROPEAN PATENT APPLICATION**

(43) Date of publication:
**12.09.2018 Bulletin 2018/37**

(51) Int Cl.:
**H04N 19/154** (2014.01)

(21) Application number: **17305237.4**

(22) Date of filing: **07.03.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• **LASSERRE, Sébastien**
**35576 CESSON-SÉVIGNÉ (FR)**
• **CAI, Kangying**
**35576 CESSON-SÉVIGNÉ (FR)**

(74) Representative: **Amor, Rim**
**TECHNICOLOR**
**1-5, rue Jeanne d'Arc**
**92130 Issy-les-Moulineaux (FR)**

(54) **QUALITY METRIC FOR POINT CLOUDS**

(57)    Method for measuring a quality of a result of a processing (10) of a first point cloud (PC1) comprising a plurality of points, in which each point is defined by its spatial location and by at least one attribute, in which the processing (10) transforms the first point cloud (PC1) into a second point cloud (PC2), wherein the method includes:
- analyzing the first point cloud (PC1) to determine a shape of said first point cloud (PC1);

- selecting a number N of viewpoints distributed over a set of surfaces centered on the first point cloud (PC1);
- evaluating N first images corresponding to projection views of the first point cloud (PC1) using the N viewpoints and N second images corresponding to projection views of the second point cloud (PC2) using the N viewpoints; and
- comparing the N first images and the N second images.

FIG.1

**Description**

FIELD OF THE INVENTION

The present disclosure generally relates to the field of point cloud data sources.

More particularly, it deals with the evaluation of the performance of a point cloud processing, such as a point cloud distortion, or deformation, as used in compression for example.

Thus, the disclosure concerns a method for measuring a quality of a result of a point cloud processing and a corresponding quality measuring device. It further concerns a computer program implementing the quality measuring method of the invention.

BACKGROUND OF THE INVENTION

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

A point cloud consists of a set of points. Each point is defined by its spatial location (x, y, z), i.e. geometry information, and different attributes, which typically include the color information in (R, G, B) or (Y, U, V) or any other color coordinate system.

Point cloud data sources are found in many applications. Important applications relying on huge point cloud data sources can be found in geographic information systems, robotics, medical tomography and scientific visualization.

Beyond these applications that are more industrial and scientifically oriented, the rise in popularity of inexpensive 3D scanners based on time of flight or other depth sensing technologies, 3D capturing on mobile devices and the rise of cloud based 3D printing are creating a huge demand for large scale interoperable compressed 3D point cloud storage and transmission data formats in the consumer market.

Scanned 3D point clouds often have thousands of points and occupy large amounts of storage space. Additionally, they can be generated at a high rate when captured live from 3D scanners, increasing the data rate even further. Therefore, point cloud compression is critical for efficient networked distribution and storage.

While there has been quite some work on point cloud compression in the 3D graphics and robotics domains, they generally do not address some of the requirements for building efficient interoperable and complete end-to-end 3D multimedia systems.

For example, the coding of color and other attribute values, which are important for high quality rendering, are often ignored or dealt with inefficiently, for example by performing a simple one way predictive coding of colors. Also, compression of time-varying point clouds, i.e. sequences of clouds captured at a fast rate over time, is limited. Furthermore, methods with low complexity and lossy encoding are of interest for systems where hardware/bandwidth limitations apply or where a low delay is critical. Research in point cloud compression still needs to happen to address these challenges.

To measure the performance of different media compression algorithms, the bitrate and distortion, i.e. quality reduction compared to the original media frames, need to be evaluated. While assessing the bitrate is straight forward, a method for measuring point cloud distortion is still needed.

A first option for this measurement is to use the Root Mean Square Error (RMSE) between input and output points. Unfortunately, this is not well defined when points are decimated or merged and the correspondence between input and output points is lost. Furthermore, the existing works calculate RMSE for geometry and attributes separately.

A second option for the measurement is to triangulate the point cloud into a 3D mesh and to use the already existing metrics for 3D meshes, such as the symmetric root mean square or symmetric Haussdorf distance. However, in this case, the triangulation method used would affect the resulting distortion metric. Additionally, metrics for the colors and attribute quality would not be well defined.

Thus, a point cloud specific quality or distortion metric is useful for the evaluation of compression algorithms.

Most of the existing works independently calculate separate quality metrics for geometry, color and other properties of point clouds.

For instance, the articles of Mekuria "Open source framework for benchmarking and quality assessment of point cloud compression algorithms", Geneva, Switzerland: ISO/IEC JTC1/SC29/WG11/m35491, February 2015 and of Mekuria and Cesar :"Document describing the quality metric and its usage in the point cloud compression reference software", Warsaw, Poland: ISO/IEC JTC1/SC29/WG11/m36529, June 2015, deploy the symmetric Haussdorf and Root-Mean-Square (RMS) distance to point clouds. For each point in the point cloud to be compared, the most nearby point in the reference point cloud is regarded as its reference. Then, the geometric and color error of these points are calculated by being compared with their corresponding reference points. Finally, the geometric PSNR (Peak Signal to Noise Ratio) is defined as the peak signal of the geometry over the symmetric RMS distance. The PSNR per YUV component is calculated in a similar way.

The article of Ochotta et al. "Compression of point-based 3D models by shape-adaptive wavelet coding of multi-heightfields," in Proc. Eurographics Symp. on Point-Based Graphics, 2004, calculates similar quality metrics for point clouds in a more plausible manner. In this article, the reference point cloud is first approximated by a set of surfaces generated by least-squares polynomial fitting. Then, each point in the point cloud to be compared is projected on those surfaces. Only the quality metrics for geometric information are discussed in this paper.

More recently, the article of Ricardo L. de Queiroz et al.:"Motion-compensated compression of dynamic voxelized point Clouds", Geneva, Switzerland: ISO/IEC JTC1/SC29/WG11/m38675, May 2016, proposes two types of quality metrics for point clouds. The first type of quality metrics is based on correspondence. It is similar with the ones proposed by the documents described above. Moreover, this paper proposes a unified quality metric for point clouds by calculating a weighted sum of PSNR geometry and PSNR color. However, it is not a trivial task to select a proper weight for combining PSNR geometry and PSNR color. And a global weight for the whole point cloud is not the optimal solution either. The second type of quality metrics is based on projection. In the projection-based distortion measure, the authors assume an orthogonal projection of the point cloud over the six sides of the bounding-box of the point cloud. The distortion metric between two point clouds is then the MSE (or PSNR) between the two corresponding composite images, each with the six orthogonal sides. The projection based metric is a good solution for the unified quality metric of point clouds. However, projection only on the six sides of the bounding-box is not enough, especially for those point clouds with complex shapes.

SUMMARY OF THE INVENTION

The present invention proposes a solution for improving the situation.

Accordingly, the present invention provides a method for measuring a quality of a result of a processing of a first point cloud comprising a plurality of points, in which each point is defined by its spatial location and by at least one attribute, in which the processing transforms the first point cloud into a second point cloud, wherein the method includes:

- analyzing the first point cloud to determine a shape of said first point cloud;
- selecting, based on the determined shape, a number N of viewpoints distributed over a set of surfaces centered on the first point cloud;
- evaluating N first images corresponding to projection views of the first point cloud using the N viewpoints and N second images corresponding to projection views of the second point cloud using the N viewpoints; and
- comparing the N first images and the N second images.

Thus, the method of the invention is based on the comparison of the projection of the first point cloud, i.e. the reference or original point cloud, and the projection of the second point cloud, that is the point cloud of which the quality metric is evaluated, i.e. the processed or reconstructed point cloud, on N viewpoints. The number N is automatically selected according to the shape of the first point cloud.

Advantageously, a point in the first point cloud or in the second point cloud is represented by a sphere.

Alternatively, a point in the first point cloud or in the second point cloud is represented by a disk.

According to a first embodiment, evaluating the N first images and N second images comprises rendering the N first images and the N second images.

According to a second embodiment, evaluating the N first images and N second images comprises estimating the N first images and N second images without rendering the N first images and N second images.

Without rendering the images, the complexity of the method and the requirement of the necessary hardware are reduced.

Advantageously, estimating the N first images and N second images includes:

- determining a contribution of the at least one attribute of each point in the first point cloud;
- determining the contribution of the attributes of all the points of the first point cloud;
- determining a contribution of the at least one attribute of each point in the second point cloud; and
- determining the contribution of the attributes of all the points of the second point cloud.

Advantageously, these contributions are determined at a point of the second point cloud or at a resampled point chosen from points uniformly distributed on a surface represented by the first point cloud or the second point cloud.

According to an embodiment, the attribute of each point in the first point cloud and in the second point cloud is represented by a Gaussian distribution function.

Advantageously, comparing the N first images and the N second images includes comparing the contribution of both the spatial locations and the attributes of all the points of the first point cloud and the contribution of both the spatial locations and the attributes of all the points of the second point cloud.

According to an embodiment, the method includes determining a quality metric of the second point cloud using a symmetric Haussdorf distance and/or a Root-Mean-Square, RMS, distance between the first point cloud and the second point cloud.

Preferably, the at least one attribute includes the color.

The present invention also provides a device for measuring a quality of a result of a processing of a first point cloud comprising a plurality of points, in which each point is defined by its spatial location and by at least one attribute, in which the processing transforms the first point cloud into a second point cloud, wherein the device includes:

- an analyzing module configured to analyze the first point cloud to determine a shape of said first point cloud;
- a selection module configured to select, based on the determined shape, a number N of viewpoints distributed over a set of surfaces centered on the first point cloud; and
- an evaluation module configured to evaluate N first images corresponding to projection views of the first point cloud using the N viewpoints and N second images corresponding to projection views of the second point cloud using the N viewpoints; and
- a comparison module configured to compare the N first images and the N second images.

According to a first embodiment, the evaluation module is configured to render the N first images and the N second images.

According to a second embodiment, the evaluation module is configured to estimate the N first images and the N second images without rendering the N first images and the N second images.

The method according to the invention may be implemented in software on a programmable apparatus. It may be implemented solely in hardware or in software, or in a combination thereof.

Since the present invention can be implemented in software, the present invention can be embodied as computer readable code for provision to a programmable apparatus on any suitable carrier medium. A carrier medium may comprise a storage medium such as a floppy disk, a CD-ROM, a hard disk drive, a magnetic tape device or a solid state memory device and the like.

The invention thus provides a computer-readable program comprising computer-executable instructions to enable a computer to perform the quality measurement method of the invention.

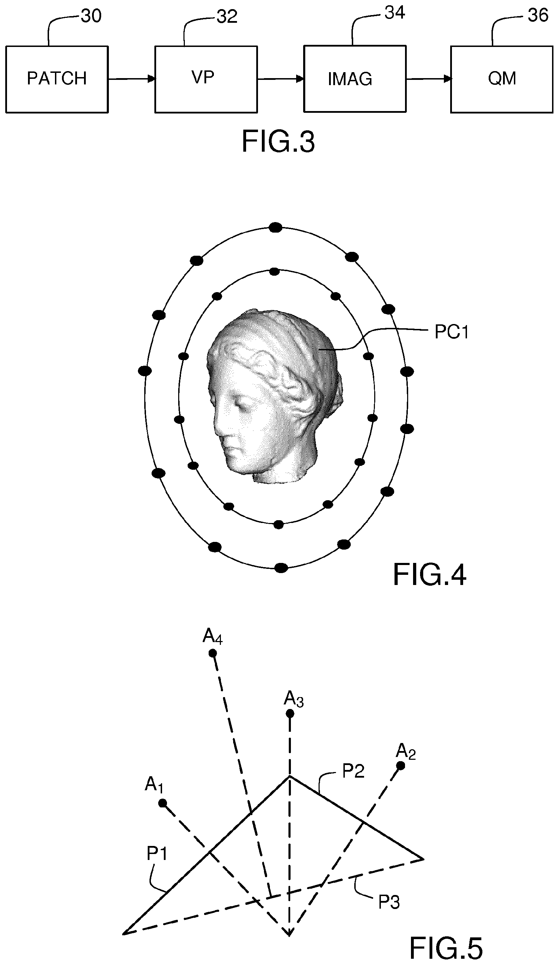

The diagram of figure 3 illustrates an example of the general algorithm for such computer program.

BRIEF DESCRIPTION OF THE DRAWINGS

The present invention is illustrated by way of examples, and not by way of limitation, in the figures of the accompanying drawings, in which like reference numerals refer to similar elements and in which:

- Figure 1 is a schematic view illustrating the principle of a point cloud quality metric evaluation, according to an embodiment of the invention;

- Figure 2 is a schematic view illustrating the use of the point cloud quality metric evaluation in an inter coding system of a time varying point cloud, according to an embodiment of the invention;

- Figure 3 is a flowchart showing the steps of the quality measurement method, according to an embodiment of the present invention;

- Figure 4 shows an example of viewpoints distribution, according to an embodiment of the present invention;

- Figure 5 shows an example of selection of viewpoints, according to an embodiment of the present invention;

- Figure 6 shows an example of a Gaussian distribution of the contribution of the color of a point in a point cloud, according to an embodiment of the present invention; and

- Figure 7 is a schematic view illustrating a quality measurement device, according to an embodiment of the invention.

DETAILED DESCRIPTION OF PREFERRED EMBODIMENTS

A point cloud is a set of points in a 3D space, each with associated attributes, e.g. color, material properties, etc. Point clouds can be used to reconstruct an object or a scene as a composition of such points. They can be captured using multiple cameras and depth sensors in various setups and may be made up of thousands up to billions of points in order to realistically represent reconstructed scenes. An illustration of a point cloud referenced PC1 is shown in Figure 4.

The point cloud PC1 is defined as a set of points wherein a point v has as a mandatory position in a 3D space *(x,y,z)* and an optional color attribute c that has components *r,g,b* or *y,u,v* and optional other attributes $(a_0, ...a_A)$ possibly representing normal or texture mappings.

Thus, a point v in a point cloud can be defined as:

$$point \; v = \left(((x,y,z),[c],[a_0..a_A]): x,y,z \in R, [c \in (r,g,b) \, | r,g,b \in N], [a_i \in [0,1]]\right)$$

The point cloud PC1 is then simply a set of K points without a strict ordering:

$$PC1 = \{(v_i): i = 0 \, ..... \, K-1\}$$

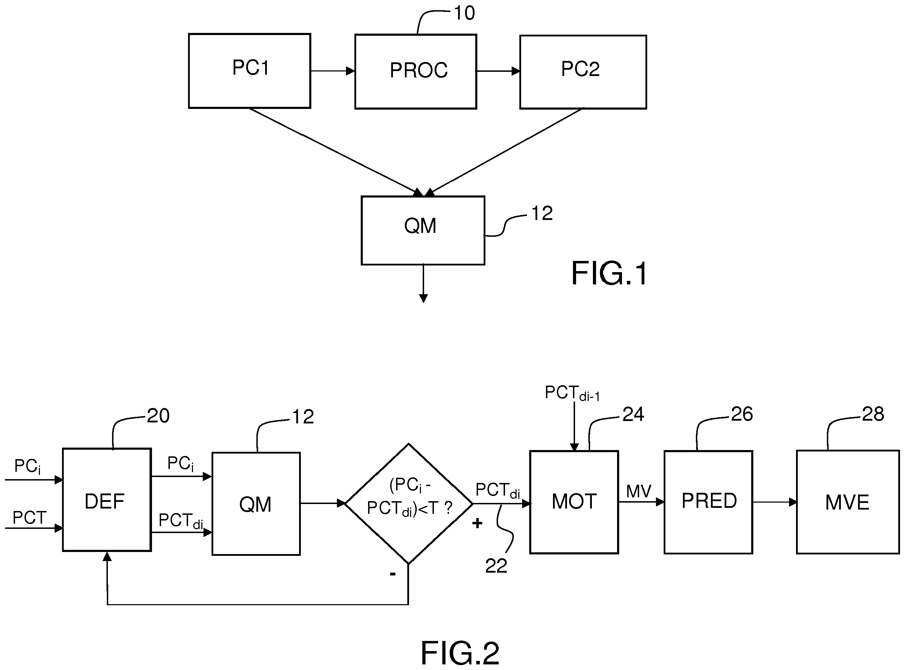

Let's consider, with reference to Figure 1, that the point cloud PC1 is processed using a processing operation 10 resulting in a second point cloud PC2. This processing is for example a lossy or lossless compression comprising for instance compression of geometry and attributes, scalable/progressive coding, coding of sequences of point clouds captured over time, and random access to subsets of the point cloud. other examples of the processing operation include point cloud upsampling or downsampling which changes the number of points of the point cloud, point cloud resampling which keeps the same number of points, point cloud deformation, etc.

The present invention provides a quality metric 12 for the evaluation of the quality of the result of the processing 10 operated on the original point cloud PC1, or in other words a quality metric for the second point cloud PC2.

The first point cloud PC1 (original) will act as a reference for determining the quality of the second point cloud PC2 (degraded).

The second point cloud PC2 consists of M points, where M is not necessarily equal to K. PC2 is a version with a different quality possibly resulting from lossy encoding and decoding of PC1. This processing can result in a different number of points M.

The proposed quality metric can be used in various processing tasks of point clouds, multi-view/free-view videos and 3D meshes, such as resampling, compression and transmission.

In the example illustrated in Figure 2, the proposed quality metric is used to compress time-varying point clouds.

Time-varying or dynamic point clouds such as humans in motion can now be captured by arrays of color plus depth (or 'RGBD') video cameras, and such data is getting very popular in emerging applications such as animation, gaming, virtual reality, and immersive communications.

As each frame is independently captured, the geometry of time-varying point clouds has little explicit spatio-temporal structure. For example, frames, which are the point clouds captured at a given time instant, may have different numbers of points, and there is no explicit association between points over time. Performing motion estimation, motion compensation, and effective compression of such data is therefore a challenging task.

The commonly used inter coding framework for time-varying point clouds is as shown in Figure 2. A template point cloud, PCT, is used to facilitate the motion estimation step of the inter coding. For each frame $PC_i$, PCT is deformed at 20 to match $PC_i$. After a threshold T defined by a user specified reconstruction error is reached at 22, instead of $PC_i$, $PCT_{di}$, the deformed template point cloud, is used for the further computation including a motion estimation 24 resulting in a motion vector MV, a prediction 26 and a motion vector and residual encoding 28. The details of this computation for the inter-coding are not part of the present disclosure.

In this context, the quality metric 12, resulting from the method of quality measuring according to embodiments of the present invention, can be advantageously used to estimate the quality of the deformed template point cloud $PCT_{di}$ or in other terms to compare the frame $PC_i$ with the deformed template point cloud $PCT_{di}$.

The flowchart of Figure 3 details the steps of the method of measure of the quality of the result of the processing 10, providing the second point cloud PC2 from the first point cloud PC1, according to a preferred embodiment.

At a first step 30, the point clouds PC1 and PC2 are analyzed in order to determine that the shapes represented by PC1 and PC2 respectively consist of a number of plane-like patches.

According to this analysis, each point cloud PC1, PC2 is segmented into plane-like patches and the points on the patch boundaries are regarded as feature points.

Then, at step 32, a number N of viewpoints distributed over a set of surfaces centered on the first point cloud are selected.

An example of selected viewpoints is shown in Figure 4.

One possibility for distributing the viewpoints is to distribute them over a set of surfaces, such as spheres for example, that are centered on the point cloud, as shown in Figure 4. According to user specified parameters, the angular step on the same surface, the diameter step between two consecutive surfaces and the number of the surfaces can be determined.

This selection is performed as described in the following steps.

At a first step, as illustrated in Figure 5, one viewpoint is put above each plane-like patch and one viewpoint is put above the patch boundary between two patches. For example, considering the patches P1 and P2 in Figure 5, these viewpoints are the points A1, A2, A3. A1 is above P1, A2 is above P2 and A3 is above the patch boundary between P1 and P2. The direction of each viewpoint is normal to the corresponding plane-like patch and pointing to the inside of the point cloud.

As an example, the plane-like patches can be defined using the method described in the article of Ainala et al. "Plane Projection Approximation and Learning Based Voxel Geometry Compression" Geneva, Switzerland: ISO/IEC JTC1/SC29/WG11/m38816, May 2016. One or a user defined number of viewpoints is put along the normal of the corresponding patch using predefined distance between the mean of the patch and the first viewpoint, and the predefined interval value between viewpoints. The normal of a patch can be calculated by the well-known PCA method.

Then, each two contiguous patches are combined into one bigger patch and the same process is repeated for each of the new patches. In the example of Figure 5, the patches P1, P2 are combined into the patch P3 and this processing results on a fourth viewpoint A4.

At a second step, among all the resultant viewpoints, the viewpoint pairs which are very close to each other, i.e. the distance between the two viewpoints is less than a certain threshold, are preferably combined.

Then, N viewpoints are finally generated at the end of step 32.

At step 34, N first images corresponding to rendered images of the first point cloud are evaluated using the N viewpoints and N second images corresponding to rendered images of the second point cloud are evaluated using the N viewpoints.

According to a first embodiment, this evaluation comprises rendering the N first images and the N second images. The images can be rendered using common OpenGL or DirectX rendering pipeline.

The rendering of each point cloud PC1, PC2 could be achieved by representing each point by a disk or a sphere.

In the case of a sphere representation, a sphere will be centered on the geometric position of the represented point. The radius of the sphere can be determined by the minimum distance between the point and the other points of the point cloud, or the average of the last n shortest distances. The number n is chosen equal to 6, for example. The sphere center has the same attribute property as the corresponding point. The distribution of the color attribute could be described by one well-known distribution function such as a Gaussian distribution that is centered on the point. The texture coordinates of the other parts of the sphere can be determined by interpolating the texture coordinates of the point and of its neighboring points.

In the case of the disk, a disk representing a point can be defined in a similar way with the additional definition of the normal of the disk. If the point normal is available, it will be used as the normal of the disk. Otherwise, the disk normal can be determined by the locally least-squares polynomial fitting operation as described in the article of Ochotta et al. "Compression of point-based 3D models by shape-adaptive wavelet coding of multi-heightfields", in Proc. Eurographics Symp. on Point-Based Graphics, 2004.

According to a second embodiment, the evaluation of the N first images and N second images comprises estimating the N first images and N second images without rendering the N first images and N second images.

According to this second embodiment, it is assumed that the distribution of point cloud attribute data, such as color can be formulated. In this way, the attribute contributed by the first point cloud PC1 can be calculated at any spatial position. Such spatial position could be a point of the second point cloud PC2 or a resampled point from points which are uniformly distributed on the surface represented by the second point cloud PC2.

Then, the attribute contributed by the second point cloud PC2 at the same spatial position is calculated. The attributes at this spatial position of the first point cloud PC1 and the second point cloud PC2 are then compared to determine a unified quality metric. The overall quality metric for the second point cloud PC2 can then be determined for example using PSNR, symmetric Haussdorf or symmetric root-mean-square (RMS) distance.

PSNR is defined here as the peak signal of the geometry over the symmetric RMS distortion. For colors, a similar metric is defined, according to which the color of the first point cloud to the most nearby color in the second point cloud is compared and the PSNR is computed per YUV component in the YUV color space. The advantage of this metric is that it corresponds to PSNR in Video Coding.

One example corresponding to the second embodiment is as follows.

According to this example, a point is represented by a sphere and color is used as the representation of the attribute data.

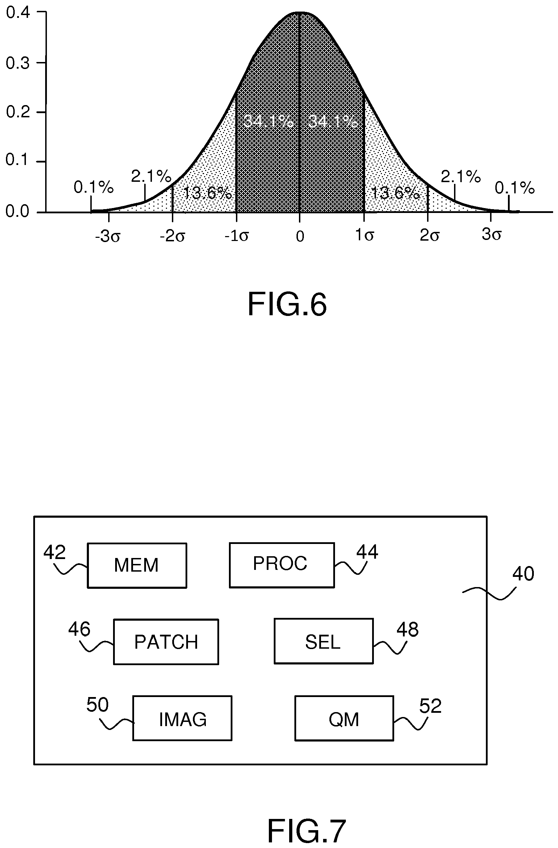

At a first step, it is assumed that the distribution of the color of each point p in the first point cloud PC1 can be described by a Gaussian distribution, as represented in Figure 6.

For any spatial position $v$, its color contributed by p can be calculated by $f(v,p) = \frac{1}{\sqrt{2\sigma^2\pi}} e^{-\frac{x^2}{2\sigma^2}}$, where $x = \|v - p\|$ and $\sigma = r/3.0$ where $r$ is the average or maximum distance of all the point pairs whose two points are closest to each other among all the points in the first point cloud PC1. If the first point cloud PC1 is produced from a scanning, $r$ can be set as the scanning resolution if it is available.

The reason of setting $\sigma = r/3.0$ is that it is reasonable to assume that the influence of one point decreases to almost zero at the position of some other point, as shown in Figure 6. $r$ can be set as a per-point parameter $r_i$ which is the minimum distance between the current point p and any other point of the first point cloud PC1.

At a second step, the color of $v$ determined by the whole first point cloud PC1 can be calculated by the sum of the color distribution of all the points of the first point cloud at $v$, for example

$$Clr(v, PC1) = \sum_{p \in PC1} \frac{1}{\sqrt{2\sigma^2\pi}} e^{-\frac{\|v-p\|^2}{2\sigma^2}}$$

Or the simplified form

$$Clr(v, PC1) = \sum_{p \in \{p_i, \|v-p_i\| < 3\sigma\}} \frac{1}{\sqrt{2\sigma^2\pi}} e^{-\frac{\|v-p\|^2}{2\sigma^2}}$$

The first and the second step are repeated for the second point cloud PC2.

Then, at step 36, the evaluated images are compared.

According to the first embodiment, the rendered images of the first point cloud and of the second point cloud are compared.

For the second embodiment in which there is no rendering of images, the quality metric of $v$ is determined by comparing $Clr(v, PC2)$ and $Clr(v, PC1)$. For example, this quality metric is defined as:

$$QM(v) = |Clr(v, PC2) - Clr(v, PC1)|$$

Then, the quality metric of the second point cloud PC2 is determined from the quality metric of $v$ using PSNR, symmetric Haussdorf or symmetric root-mean-square (RMS) distance. $v$ could be a point of the second point cloud PC2 or a resampled point from the points which are uniformly distributed on the surface represented by the second point cloud PC2.

Figure 7 illustrates a quality measurement device 40 according to an embodiment of the invention.

The quality measurement device 40 includes at least one memory 42 and at least one processor 44 configured to implement the above described steps.

More particularly, the quality measurement device 40 includes an analyzing module 46 configured to analyze the first point cloud PC1 to determine a shape of said first point cloud.

The quality measurement device 40 also includes a selection module 48 configured to select, based on the determined shape, a number N of viewpoints distributed over a set of surfaces centered on the first point cloud.

The quality measurement device 40 also includes an evaluation module 50 configured to evaluate N first images corresponding to projection views of the first point cloud using the N viewpoints and N second images corresponding to projection views of the second point cloud using the N viewpoints.

The quality measurement device 40 also includes a comparison module 52 configured to compare the N first images and the N second images.

The modules 44, 46, 48, 50, 52 are advantageously implemented by the processor(s) 44.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention is not limited to the particular embodiments disclosed, but that the invention includes all embodiments falling within the scope of the appended claims.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed to be a reference to the plural and vice versa.

A person skilled in the art will readily appreciate that various parameters disclosed in the description may be modified and that various embodiments disclosed and/or claimed may be combined without departing from the scope of the invention.

**Claims**

1.  Method for measuring a quality of a result of a processing (10) of a first point cloud (PC1) comprising a plurality of points, in which each point is defined by its spatial location and by at least one attribute, in which the processing (10) transforms the first point cloud (PC1) into a second point cloud (PC2), wherein the method includes:

    - analyzing (30) the first point cloud (PC1) to determine a shape of said first point cloud (PC1);
    - selecting (32), based on the determined shape, a number N of viewpoints distributed over a set of surfaces centered on the first point cloud (PC1);
    - evaluating (34) N first images corresponding to projection views of the first point cloud (PC1) using the N viewpoints and N second images corresponding to projection views of the second point cloud (PC2) using the N viewpoints; and
    - comparing (36) the N first images and the N second images.

2.  Method of claim 1, wherein a point in the first point cloud (PC1) or in the second point cloud (PC2) is represented by a sphere.

3.  Method of claim 1, wherein a point in the first point cloud (PC1) or in the second point cloud (PC2) is represented by a disk.

4.  Method of any one of claims 1 to 3, wherein evaluating the N first images and N second images comprises rendering the N first images and the N second images.

5.  Method of any one of claims 1 to 3, wherein evaluating the N first images and N second images comprises estimating the N first images and the N second images without rendering the N first images and the N second images.

6.  Method of claim 5, wherein estimating the N first images and N second images includes:

    - determining a contribution of the at least one attribute of each point in the first point cloud (PC1);
    - determining the contribution of the attributes of all the points of the first point cloud (PC1);
    - determining a contribution of the at least one attribute of each point in the second point cloud (PC2); and
    - determining the contribution of the attributes of all the points of the second point cloud (PC2).

7.  Method of claim 5 or 6, wherein the attribute of each point in the first point cloud (PC1) and in the second point cloud (PC2) is represented by a Gaussian distribution function.

8.  Method of any one of claims 5 to 7, wherein comparing the N first images and the N second images includes comparing the contribution of both the spatial locations and the attributes of all the points of the first point cloud (PC1) and the contribution of both the spatial locations and the attributes of all the points of the second point cloud (PC2).

9.  Method of any one of claims 1 to 8, including determining a quality metric of the second point cloud (PC2) using a symmetric Haussdorf distance and/or a Root-Mean-Square, RMS, distance between the first point cloud (PC1) and the second point cloud (PC2).

10. Method of any one of claims 1 to 9, wherein the at least one attribute includes the color.

11. Device (40) for measuring a quality of a result of a processing of a first point cloud (PC1) comprising a plurality of points, in which each point is defined by its spatial location and by at least one attribute, in which the processing transforms the first point cloud (PC1) into a second point cloud (PC2), wherein the device (40) includes:

- an analyzing module (46) configured to analyze the first point cloud (PC1) to determine a shape of said first point cloud (PC1);
- a selection module (48) configured to select, based on the determined shape, a number N of viewpoints distributed over a set of surfaces centered on the first point cloud (PC1); and
- an evaluation module (50) configured to evaluate N first images corresponding to projection views of the first point cloud (PC1) using the N viewpoints and N second images corresponding to projection views of the second point cloud (PC2) using the N viewpoints; and
- a comparison module (52) configured to compare the N first images and the N second images.

12. Device of claim 11, wherein the evaluation module (50) is configured to render the N first images and the N second images.

13. Device of claim 11, wherein the evaluation module is configured to estimate the N first images and N second images without rendering the N first images and N second images.

14. A computer-readable program comprising computer-executable instructions to enable a computer to perform the method of any one of claims 1 to 10.

EP 3 373 583 A1

FIG.1

FIG.2

FIG.3

FIG.4

FIG.5

## FIG.6

## FIG.7

Europäisches
Patentamt

European
Patent Office

Office européen
des brevets

# EUROPEAN SEARCH REPORT

Application Number

EP 17 30 5237

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RUFAEL MEKURIA ET AL: "Proposal for Quality and Performance Metrics Point Cloud Compression", 111. MPEG MEETING; 6-2-2015 - 20-2-2015; GENEVA; (MOTION PICTURE EXPERT GROUP OR ISO/IEC JTC1/SC29/WG11),, no. m35491, 30 January 2015 (2015-01-30), XP030063859, * section "2 Quality Evaluation Metric for Point Cloud Compression"; fig. 1; table 1 * | 1,5, 9-11,14 | INV. H04N19/154 |
| A | DAN-DAN LIU ET AL: "The scattered point cloud denoising method based on surfacelet transform of 3D context", COMPUTER DESIGN AND APPLICATIONS (ICCDA), 2010 INTERNATIONAL CONFERENCE ON, IEEE, PISCATAWAY, NJ, USA, 25 June 2010 (2010-06-25), pages V5-465, XP031726569, ISBN: 978-1-4244-7164-5 * section "III. The scattered point cloud denoising method based on surfacelet transform of 3D context"; fig. 1 * | 1,5-8, 11,13,14 | |
| A | US 2012/013710 A1 (EHRLICH SHARON [IL] ET AL) 19 January 2012 (2012-01-19) * paragraphs [0062] - [0064], [0084] * * figures 1,2,4,5,7 * | 1-3,5,6, 8,10,11, 13,14 | TECHNICAL FIELDS SEARCHED (IPC) H04N |
| A | US 6 750 873 B1 (BERNARDINI FAUSTO [US] ET AL) 15 June 2004 (2004-06-15) * column 3, line 63 - column 4, line 24 * * column 10, line 66 - column 11, line 6 * | 1,4,7, 10-12,14 | |

-/--

The present search report has been drawn up for all claims

| Place of search | Date of completion of the search | Examiner |
|---|---|---|
| Munich | 6 June 2017 | Fassnacht, Carola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 17 30 5237

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KARTHIK AINALA (UMKC) ET AL: "Point Cloud Geometry Compression with Plane Projection Approximation and Learning Based Compression", 115. MPEG MEETING; 30-5-2016 - 3-6-2016; GENEVA; (MOTION PICTURE EXPERT GROUP OR ISO/IEC JTC1/SC29/WG11),, no. m38816, 28 May 2016 (2016-05-28), XP030067168, * Section "1 Background", subsection "Intra coding of Point Cloud Geometry" * ----- | 1-14 | |
| A | MEKURIA RUFAEL ET AL: "Overview of the MPEG Activity on Point Cloud Compression", 2016 DATA COMPRESSION CONFERENCE (DCC), IEEE, 30 March 2016 (2016-03-30), page 620, XP033027780, DOI: 10.1109/DCC.2016.91 [retrieved on 2016-12-15] * the whole document * ----- | 1,11,14 | |

TECHNICAL FIELDS SEARCHED (IPC)

The present search report has been drawn up for all claims

| Place of search | Date of completion of the search | Examiner |
|---|---|---|
| Munich | 6 June 2017 | Fassnacht, Carola |

EPO FORM 1503 03.82 (P04C01)

## ANNEX TO THE EUROPEAN SEARCH REPORT
## ON EUROPEAN PATENT APPLICATION NO.

EP 17 30 5237

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2017

| Patent document cited in search report | | Publication date | Patent family member(s) | | Publication date |
|---|---|---|---|---|---|
| US 2012013710 | A1 | 19-01-2012 | EP | 2399242 A1 | 28-12-2011 |
| | | | US | 2012013710 A1 | 19-01-2012 |
| | | | WO | 2010095107 A1 | 26-08-2010 |
| US 6750873 | B1 | 15-06-2004 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MEKURIA.** Open source framework for benchmarking and quality assessment of point cloud compression algorithms. *ISO/IEC JTC1/SC29/WG11/m35491,* February 2015
- **MEKURIA ; CESAR.** Document describing the quality metric and its usage in the point cloud compression reference software. *ISO/IEC JTC1/SC29/WG11/m36529,* June 2015
- **OCHOTTA et al.** Compression of point-based 3D models by shape-adaptive wavelet coding of multi-heightfields. *Proc. Eurographics Symp. on Point-Based Graphics,* 2004

- **RICARDO L. DE QUEIROZ et al.** Motion-compensated compression of dynamic voxelized point Clouds. *ISO/IEC JTC1/SC29/WG11/m38675,* May 2016
- **AINALA et al.** Plane Projection Approximation and Learning Based Voxel Geometry Compression. *ISO/IEC JTC1/SC29/WG11/m38816,* May 2016